Europäisches Patentamt

European Patent Office

Office européen des brevets

(11) Veröffentlichungsnummer : **0 180 062**
**B1**

# (12) EUROPÄISCHE PATENTSCHRIFT

(45) Veröffentlichungstag der Patentschrift :
15.03.89

(51) Int. Cl.⁴ : **B 61 D 17/22**, B 62 D 47/02

(21) Anmeldenummer : 85112627.6

(22) Anmeldetag : 04.10.85

(54) Abdeckung der Spurfuge zwischen dem Faltenbalg und der drehscheibenförmigen Übergangsplattform von Schienen- und Strassengelenkzügen.

(30) Priorität : 31.10.84 DE 3439807

(43) Veröffentlichungstag der Anmeldung :
07.05.86 Patentblatt 86/19

(45) Bekanntmachung des Hinweises auf die Patenterteilung : 15.03.89 Patentblatt 89/11

(84) Benannte Vertragsstaaten :
BE DE FR SE

(56) Entgegenhaltungen :
CH--A-- 376 371
CH--A-- 380 186
DE--A-- 2 826 779
FR--A-- 2 333 657
FR--A-- 2 348 829
US--A-- 503 160
US--A-- 2 193 156
US--A-- 2 225 951

(73) Patentinhaber : HÜBNER Gummi- und Kunststoff GmbH
Agathofstrasse 15
D-3500 Kassel-Bettenhausen 1 (DE)

(72) Erfinder : Die Erfinder haben auf ihre Nennung verzichtet

(74) Vertreter : Walter, Helmut
Aubingerstrasse 81
D-8000 München 60 (DE)

EP 0 180 062 B1

## Beschreibung

Zwischen den einzelnen Gliedern von Schienen- und Straßengelenkzügen, die der Personenbeförderung dienen, sind Übergangsplattformen üblich, die ein Überwechseln von Personen zwischen den einzelnen Fahrzeuggliedern gestatten. Solche Übergangsplattformen können auch eine um eine vertikale Achse schwenkbare Drehscheibe aufweisen (DE-A-28 29 779). Um das Überwechseln geschützt zu ermöglichen, ist es üblich, die Übergangsplattformen mit einem Übergangsschutz zu umgeben. Der Übergangsschutz ist häufig ein röhren- oder tunnelförmiger Faltenbalg, der zur Isolierung gegen Schall und dergleichen aus einem mehrschichtigen Material bestehen kann (FR-A-1 333 657). Zwischen der Übergangsplattform und den vertikalen Seitenwänden des Faltenbalges besteht notwendigerweise ein Spalt, der insbesondere bei drehscheibenförmiger Ausbildung der Übergangsplattform so groß ist, daß er abgedeckt werden muß, damit die Fahrgäste nicht zu Schaden kommen. Bekannte Mittel für diese Abdeckung sind Abdeckbleche, die an jeder Seite der einander zugekehrten Enden der Fahrzeugglieder mittels je eines Konsoles befestigt sind und als um die vertikale Schwenkachse der Fahrzeugglieder gekrümmte Zylinderabschnitte ausgebildet sind. Bekannt ist es auch, auf der als Drehscheibe ausgebildeten Übergangsplattform seitlich je ein Geländer zu befestigen, um den überwechselnden Personen einen seitlichen Halt zu geben und auf einer zum Handlauf des Geländers parallelen Stange unterhalb des Handlaufes mit Ringen ein horizontal liegendes Tuch zu lagern, dessen anderes Ende an jeweils einer der Balgseitenwände befestigt ist. In diesem Zusammenhang ist es auch bekannt, in einem vorbestimmten Abstand oberhalb der drehscheibenförmigen Übergangsplattform eine schräg verlaufende Schürze an jeder Seitenwand des Faltenbalges zu befestigen und diese mit ihrem unteren Rand auf der Übergangsplattform aufliegen zu lassen. Die Schürzen sind entsprechend den Faltenbalgwänden gefaltet. Für die seitliche Abdeckung des Faltenbalges sind auch Blechplatten bekannt, die an den einander zugekehrten Stirnseiten der gelenkig miteinander verbundenen Fahrzeuge befestigt sind und sich in der Mitte zwischen den beiden Fahrzeugen überlappen (CH-A-376 371, CH-A-380 186). Solche Anordnungen können der inneren und äußeren seitlichen Balgabdeckung dienen. Dienen sie der inneren seitlichen Balgabdeckung, so können sie auch die Spurfuge zwischen Drehscheibe und Faltenbalg abdecken, wenn sie weit genug nach unten der Oberseite der Drehscheibe genähert sind. Schließlich sind zur Komforterhöhung auch doppelwandige Übergangsschutzeinrichtungen bekannt, bei denen ein äußeres glattes Tuch der äußeren Kontur der beiden miteinander gekuppelten Fahrzeuge folgt, um eine gute Windschlüpfigkeit zu gewährleisten, während ein inneres glattes Tuch den Rändern der Durchgangsöffnungen der beiden miteinander gekuppelten Fahrzeuge folgt (US-A-2 225 951). Das innere glatte Tuch liegt jedoch außerhalb der Übergangsbrücke, so daß zwischen dieser und dem Tuch ein Spalt besteht, der durch besondere Gummiprofile abgedeckt ist. Entsprechendes gilt, wenn bei einer anderen bekannten Lösung statt der glatten Tücher, die aus Gummi bestehen müssen, übliche Faltenbälge als innerer und äußerer Faltenbalg zur Anwendung kommen (US-A-2 193 156).

In zunehmendem Maße wird die Forderung erhoben, den den Fahrgästen gebotenen Komfort zu erhöhen und zwar auch in den Übergangsbereichen von Gelenkfahrzeugen. Die Forderung nach erhöhtem Komfort schließt für die Übergangsbereiche insbesondere die Forderung nach guter Geräusch- und Temperaturisolierung ein, wobei davon ausgegangen werden muß, daß bei bekannten Faltenbalganordnungen dieser Forderung nur unzulänglich oder aufwendig entsprochen wird.

Der Erfindung liegt die Aufgabe zugrunde, eine Faltenbalganordnung so auszugestalten, daß sie in hohem Maße geräusch- und temperaturisolierend sein soll, daß sie einfach zu montieren sein soll und daß die Spurfuge für die eine Drehscheibe aufweisende Übergangsbrücke gut abgedeckt ist.

Bei der Lösung der Aufgabe geht die Erfindung von einer Faltenbalganordnung aus, die zum Einbau in Schienen- oder Straßengelenkzüge im Bereich der Übergangsplattform bestimmt ist, wobei die Übergangsplattform eine um eine vertikale Achse drehbare Scheibe aufweist.

Die Erfindung ist dadurch gekennzeichnet, daß bei einer solchen Faltenbalganordnung diese Faltenbalganordnung drei Teile aufweist, von denen ein Teil als Außenbalg in der Form einer im Querschnitt im wesentlichen rechteckigen Röhre oder zumindest eines entsprechend rechteckigen Tunnels aus verformbarem Material mit umlaufenden bzw. vom einen zum anderen Ende verlaufenden Falten seitlich von der Plattform an dieser vorbeigeführt ist, während die beiden anderen Teile aus in gleicher Weise wie der Außenbalg gefaltetem Material bestehen, jedoch als, von den Falten abgesehen, ebene Vorhänge vor den Seitenwänden des Außenbalges angeordnet sind, wobei heder der Vorhänge mit seinem oberen Ende am horizontal verlaufenden Dach des Außenbalges aufgehängt ist mittels Winkelstücken, deren vertikale Schenkel in die vertikalen Falten der Vorhänge eingeführt und dort mit diesen verbunden sind, während die horizontalen Schenkel der Winkelstücke in die horizontalen Falten des Daches des Außenbalges eingeführt und dort mit diesen verbunden sind, wobei die Länge der Vorhänge so bemessen ist, daß die Vorhänge mit ihren unteren Enden dicht über der Ebene der Plattform enden und wobei schließlich die letzten Falten der Vorhänge und des Außenbalges miteinander verbunden sind, und zwar durch Endrahmen zur Befestigung an den beiden Enden der Übergangsbrücke.

Diese Lösung bietet den Vorteil, daß durch die doppelwandige Ausbildung der Seitenwände des Faltenbalges eine erheblich zusätzliche Geräusch- und Temperaturisolierung im Bereich des Überganges zwischen zwei Fahrzeuggliedern möglich ist und gleichzeitig die Spurfuge zwischen dem eigentlichen Faltenbalg, d. h. den äußeren Balgseitenwänden und der Übergangsplattform, gut abgedeckt ist. Der Balg hat im Inneren eine optisch begriedigende, großflächige Ausgestaltung. Der Bereich zwischen den Balginnen- und -außenwänden bietet die Möglichkeit der geschützten und unauffälligen Unterbringung von Apparaturen, Kabeln und Leitungen. Schließlich ist die Faltenbalganordnung einfach zu montieren, weil die Anordnung zwar drei wesentliche Teile aufweist, trotzdem aber wie bei üblichen Bälgen mit einfachen Seitenwänden an jedem Ende der Balganordnung nur ein Endrahmen mit zwei miteinander gekuppelten Fahrzeugen eines Gelenkzuges zu verbinden ist, wobei selbstverständlich an die Stelle der Verbindung, mit einem der beiden miteinander gekuppelten Fahrzeuge die Verbindung mit einem Endrahmen einer zweiten Balghälfte bei bekannten quergeteilten Bälgen treten kann.

In weiterer Ausgestaltung der Erfindung ist die Faltenbalganordnung dadurch gekennzeichnet, daß Innenkanten des Außenbalges und der Vorhänge U-förmige Schienen aufweisen und daß auf Schienen des Außenbalges und der Vorhänge U-förmige Bügel mit vertikalen Schenkeln aufgesteckt sind, deren horizontale Stege den Abstand zwischen Außenbalg und Vorhängen bestimmen. Hierdurch erhält die Balganordnung noch zusätzlich den Vorteil, daß sie im Bereich der Seitenwände sehr stabil ist, ohne daß ihre Beweglichkeit beeinträchtigt wäre. Dabei ist allerdings zu beachten, daß es generell bekannt ist, bei doppelwandigen Faltenbälgen, Innenbalg und Außenbalg gegeneinander mit Stützen gegeneinander abzustützen (US-PS 503 160).

Die Erfindung ist nachfolgend anhand der Zeichnung näher erläutert. In der Zeichnung zeigt

Fig. 1 einen Teil einer erfindungsgemäßen Anordnung in perspektivischer Darstellung,

Fig. 1a eine Einzelheit der Anordnung gemäß Fig. 1 und

Fig. 2 ein Abstandsstück für die Abstützung des erfindungsgemäßen Vorhanges am eigentlichen Faltenbalg.

Der äußere und an sich übliche Faltenbalg ist mit 1 bezeichnet. Er ist zwischen den einander zugekehrten Stirnseiten zweier aufeinanderfolgender Fahrzeuge eines Gliederfahrzeuges, beispielsweise eines Gelenkomnibusses, angeordnet und mit seinen Enden an diesen Stirnseiten befestigt. Er bildet eine ringsum geschlossene, an beiden Enden offene Röhre, die eine Übergangsplattform mit einer Drehscheibe 2 als wesentlichem Teil umgibt. Es ist üblich, die Spurfuge zwischen Übergangsplattform mit Drehscheibe 2 und den Seitenwänden des Außenbalges 1 abzudecken. Dieser Abdeckung dienen zwei vor den Seitenwänden des Außenbalges 1 angeordnete entsprechend dem Außenbalg gefaltete Vorhänge 3, 3, die an der Decke des Außenbalges 1 aufgehängt sind, vor der jeweiligen Faltenbalgseitenwand nach unten hängen und mit ihren unteren Enden kurz über der Drehscheibe 2 enden. Der Aufhängung am oberen Ende dienen Winkelstücke 4, deren etwa horizontale Schenkel an der Decke des Faltenbalges befestigt sind und deren vertikale Schenkel dem Vorhang 3 zugeordnet sind. Die Bereiche zwischen den beiden Vorhängen 3, 3 und den Seitenwänden des Außenbalges 1 können zur Anbringung von Mitteln zur Geräusch- und Temperaturdämmung oder für die Aufnahme von Versorgungseinrichtungen verwendet werden. Unabhängig davon, was in den Zwischenwandbereichen untergebracht ist, bietet die Faltenbalganordnung nach innen eine ästhetisch befriedigende geschlossene Fläche und die Spurfuge ist abgedeckt.

Jeder Vorhang 3, 3 entspricht im Aufbau den Seitenwänden des Außenbalges 1. In beiden Fällen sind beispielsweise eine Anzahl einzelner Bahnen 5, 6 aus gummiertem Gewebe an ihren Enden zusammengenäht oder miteinander verklebt, so daß die zieharmonikaartige Faltung entsteht. Zur Verstärkung sind auf die Ränder im Querschnitt U-förmige Schienen 7 (Zwischenrahmen) aufgesteckt. Jeder Vorhang 3, 3 ist damit in der gleichen Weise einerseits ausreichend steif, andererseits so nachgiebig, wie es insbesondere das Durchfahren von Kurven notwendig macht. Um die Seitenwände des Außenbalges 1 und die Vorhänge 3, 3 nicht zu sehr gegeneinander auswandern zu lassen, sollte jeder Vorhang an jedem Ende zusammen mit den Balgenden an einem gemeinsamen Faltenbalgendrahmen 8 befestigt sein, mit dem die Faltenbalganordnung den Fahrzeugenden zuzuordnen ist.

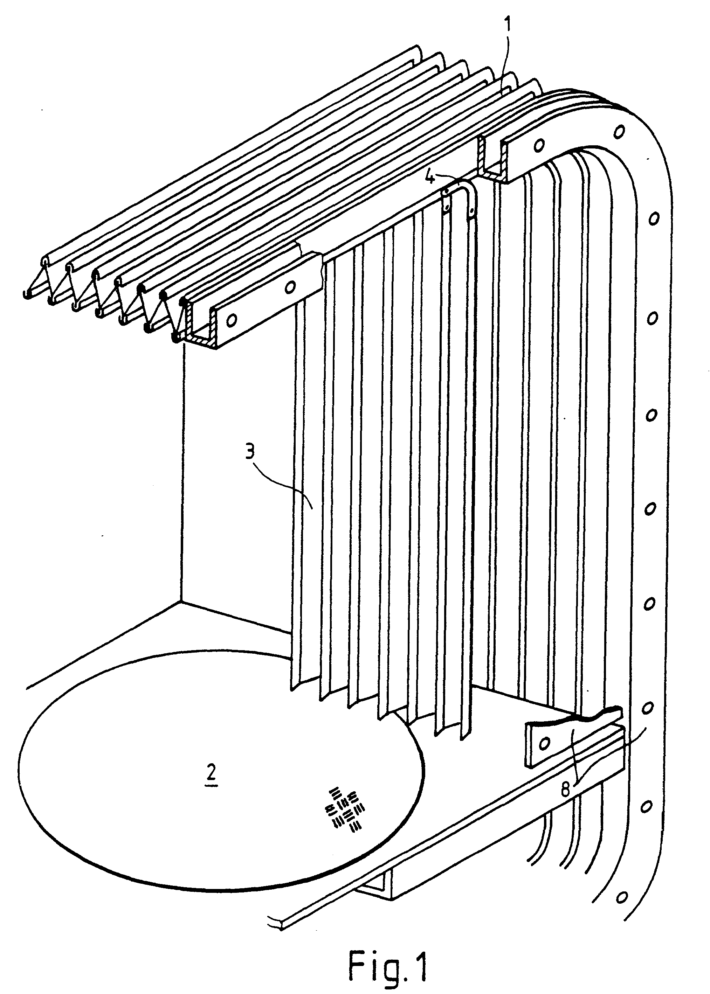

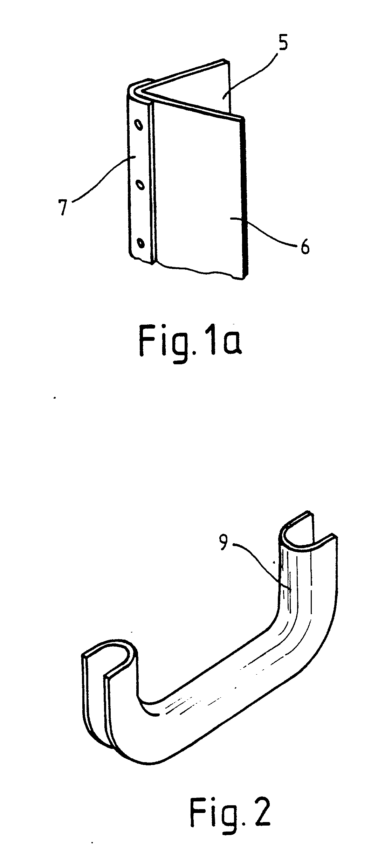

Es können bei der erfindungsgemäßen Faltenbalganordnung in Grenzen seitliche Stöße aufgenommen werden, die beispielsweise von einem Passagier ausgehen, der beim Überwechseln von einem zum anderen Fahrzeug infolge der Fahrbewegungen in Grenzen ins Straucheln kommt. Um jedoch auch größere Seitenkräfte ungefährdet aufnehmen zu können, soll in weitere Ausgestaltung der Erfindung jeder Vorhang 3, 3 gegenüber der ihm zugehörigen Seitenwand des Außenbalges unterhalb seiner Aufhängung mit den Winkelstützen 4 in horizontaler Querrichtung abgestützt sein. Hierzu dienen insbesondere Stützelemente 9 gemäß Fig. 2. Aus dem Strangmaterial, aus dem die Zwischenrahmen 7 bestehen, sind U-förmige Bügel 9 gebogen (die ihrerseits einen U-förmigen Querschnitt haben) und die mit ihren in die Wandebenen gebogenen Enden auf die Zwischenrahmen von jeweiliger Balgseitenwand und jeweiligem Vorhang bzw. auf die keine solche Rahmen aufweisenden Kanten zwischen Bahnen 5, 6 aufgesteckt sind, was infolge der Elastizität der Schenkel des U des Querschnittes unschwer möglich ist. Die Länge des gestreckten, zu den Wandflächen senkrechten Teiles des Bügels 9 zwischen den abgebogenen Bügelenden bestimmt den Abstand zwischen Balgseitenwand und Vorhang bzw. ist von diesem Abstand abhängig. Da erhöhte Seitenkräfte insbesondere in der Höhe der Schultern jugendlicher Menschen zu erwarten sind, sollten zumindest in dieser Höhe mehrere solcher Bügel, in Fahrzeuglängsrichtung aufeinanderfolgend, vorgesehen sein. Die Zahl der in Fahrzeuglängsrichtung aufeinanderfolgenden stützenden Bügel hängt von der zu erwartenden Beanspruchung ab.

**Patentansprüche**

1. Faltenbalganordnung zum Einbau in Schienen- oder Straßengelenkzüge im Bereich einer Übergangsplattform (2), die eine um eine vertikale Achse drehbare Scheibe (2) aufweist, dadurch gekennzeichnet, daß die Faltenbalganordnung drei Teile (1, 3 und 3) aufweist, von denen ein Teil (1) als Außenbalg in der Form einer im Querschnitt im wesentlichen rechteckigen Röhre oder zumindest eines entsprechend rechteckigen Tunnels aus verformbarem Material mit umlaufenden bzw. vom einen zum anderen Ende verlaufenden Falten seitlich von der Plattform an dieser vorbeigeführt ist, während die beiden anderen Teile aus in gleicher Weise wie der Außenbalg gefaltetem Material bestehen, jedoch als, von den Falten abgesehen, ebene Vorhänge (3, 3) vor den Seitenwänden des Außenbalges (1) angeordnet sind, wobei jeder der Vorhänge mit seinem oberen Ende am horizontal verlaufenden Dach des Außenbalges aufgehängt ist mittels Winkelstücken (4), deren vertikale Schenkel in die vertikalen Falten der Vorhänge eingeführt und dort mit diesen verbunden sind, während die horizontalen Schenkel der Winkelstücke (4) in die horizontalen Falten des Daches des Außenbalges (1) eingeführt .und dort mit diesen verbunden sind, wobei die Länge der Vorhänge (3, 3) so bemessen ist, daß die Vorhänge mit ihren unteren Enden dicht über der Ebene der Plattform (2) enden und wobei schließlich die letzten Falten der Vorhänge (3, 3) und des Außenbalges (1) miteinander verbunden sind, und zwar durch Endrahmen (8) zur Befestigung an den beiden Enden der Übergangsbrücke.

2. Faltenbalganordnung nach Anspruch 1, dadurch gekennzeichnet, daß Innenkanten des Außenbalges (1) und der Vorhänge (3, 3) U-förmige Schienen (7) aufweisen und daß auf Schienen des Außenbalges und der Vorhänge U-förmige Bügel (9) mit vertikalen Schenkeln aufgesteckt sind, deren horizontalen Stege den Abstand zwischen Außenbalg (7) und Vorhängen (3, 3) bestimmen.

**Claims**

1. A corrugated bellows arrangement for use in articulated rail or road vehicles near a transition platform (2) having a disc (2) rotatable around a vertical axis, characterised in that the corrugated bellows arrangement has three parts (1, 3 and 3) of which one part (1), as outer bellows in the form of substantially rectangular-section tubes or at least of a correspondingly rectangular tunnel, made of a deformable material having peripheral corrugations extending from one end to the other, extends laterally past the platform, while the other two parts are made of material corrugated in the same way as the outer bellows but, apart from the bellows, are disposed as flat curtains (3, 3) before the outer bellows side walls, each curtain being suspended at its top end on the horizontal ceiling or roof of the outer bellows by means of angle members (4) whose vertical arms extend into the vertical folds or corrugations of the curtains and are connected thereto in the corrugations, while the horizontal arms of the angle members (4) are introduced into the horizontal folds or corrugations of the roof or ceiling of the outer bellows (1) and are connected to such corrugations there, the length of the curtains (3, 3) being such that the curtain bottom ends terminate a very short distance above the plane of the platform (2), the final corrugations of the curtains (3, 3) and of the outer bellows (1) being interconnected by end frames (8) for securing to the two ends of the transition bridge.

2. An arrangement according to claim 1, characterised in that inner edges of the outer bellows (1) and of the curtains (3, 3) have U-shaped bars (7) and channel-section stirrups (9) having vertical arms are pushed on to bars of the outer bellows and of the curtains, the horizontal webs of the stirrups (9) determining the distance between the outer bellows (7) and the curtains (3, 3).

**Revendications**

1. Dispositif à soufflet prévu pour être monté dans des trains articulés ferroviaires ou routiers, dans la zone d'une plate-forme d'intercommunication (2) qui comporte une plaque tournante (2) autour d'un axe vertical, caractérisé en ce que le dispositif à soufflet comporte trois parties (1, 3 et 3) parmi lesquelles une partie (1) est en tant que soufflet extérieur sous forme d'un tube à section sensiblement rectangulaire ou au moins d'un tunnel à section rectangulaire appropriée en matériau déformable avec des plis périphériques ou allant d'une extrémité à l'autre, guidée devant la plate-forme latéralement à celle-ci, tandis que les deux autres parties sont constituées en matériau plié de la même façon que le soufflet extérieur, en étant cependant disposées, à l'exception des plis, comme des rideaux plans (3, 3) devant les parois latérales du soufflet extérieur (1), chacun des rideaux étant suspendu par son extrémité supérieure au toit horizontal du soufflet extérieur au moyen d'équerres (4) dont les branches verticales sont introduites dans les plis verticaux des rideaux et assemblés avec eux en cet emplacement, tandis que les branches horizontales des équerres (4) sont introduites dans les plis horizontaux du toit du soufflet extérieur (1) et assemblés avec eux en cet emplacement, la longueur des rideaux (3, 3) étant déterminée pour que les extrémités terminales inférieures des rideaux soient juste au-dessus du plan de la plate-forme (2), les derniers plis des rideaux (3, 3) et du soufflet extérieur (1) étant enfin assemblés entre eux, à savoir par des cadres d'extrémité (8) pour la fixation sur les deux extrémités du pont d'intercommunication.

2. Dispositif à soufflet selon la revendication 1, caractérisé en ce que les bords intérieurs du soufflet extérieur (1) et des rideaux (3, 3) comportent des profilés (7) en forme de U et en ce que des étriers (9) en forme de U à branches verticales sont engagés sur des profilés du soufflet extérieur et des rideaux, les âmes horizontales de ces étriers déterminant la distance entre le soufflet extérieur (7) et les rideaux (3, 3).

Fig.1

Fig. 1a

Fig. 2